# EUROPEAN PATENT APPLICATION

(11) **EP 4 610 850 A1**
(43) Date of publication of application: **03.09.2025**
(21) Application number: 23881473.5
(22) Date of filing: 05.09.2023
(51) Int. Cl.: G06F 16/44

(54) **METHOD AND APPARATUS FOR CONTENT PRESENTATION, DEVICE, AND STORAGE MEDIUM**

(30) Priority: 28.10.2022 CN 202211339256
(71) Applicant: Beijing Zitiao Network Technology Co., Ltd., Beijing 100190 (CN)
(72) Inventor: SHI, Yongbiao, Beijing 100028 (CN); LI, Ziwei, Beijing 100028 (CN); TANG, Bo, Beijing 100028 (CN)
(74) Representative: Marks & Clerk LLP
(86) International application number: PCT/CN2023/117028
(87) International publication number: WO 2024/087892

(57) **Abstract**

According to embodiments of the disclosure, methods, apparatuses, devices and storage medium for content presentation are provided. The method includes: presenting a set of media content items on a content presentation page; switching between a plurality of viewing modes based on a mode switching operation for the plurality of viewing modes, the set of media content items being presented in a plurality of different sizes respectively in the plurality of viewing modes; and in response to switching to at least one predetermined viewing mode of the plurality of viewing modes, presenting the set of media content items and information associated with each of the set of media content items together. In this way, the efficiency of viewing media content can be improved, the diversified demands of users for viewing modes can be met, and the user experience can be improved.

## Description

This application claims the benefit of Chinese Patent Application No. 202211339256.6, filed on October 28, 2022, and entitled "METHOD, APPARATUS, DEVICE, AND STORAGE MEDIUM FOR CONTENT PRESENTATION", the entire content of which is incorporated herein by reference.

### FIELD

Example embodiments of the present disclosure generally relate to the field of computers, and in particular, to methods, apparatuses, devices, and computer-readable storage media for content presentation.

### BACKGROUND

Currently, more and more applications are designed to provide various services to users. For example, a user may browse and view various types of content in an application, including multimedia content, such as videos, images, image sets, sounds, and the like. Users may select the content they are interested in from various types of content presented.

### SUMMARY

In a first aspect of the present disclosure, a method for content presentation is provided. The method comprises: presenting a set of media content items on a content presentation page; switching between a plurality of viewing modes based on a mode switching operation for the plurality of viewing modes, the set of media content items being presented in a plurality of different sizes respectively in the plurality of viewing modes; and in response to switching to at least one predetermined viewing mode of the plurality of viewing modes, presenting the set of media content items and information associated with each of the set of media content items together.

In a second aspect of the present disclosure, an apparatus for content presentation is provided. The apparatus comprises: a first presentation module configured to present a set of media content items on a content presentation page; a switching module configured to switch between a plurality of viewing modes based on a mode switching operation for the plurality of viewing modes, the set of media content items being presented in a plurality of different sizes respectively in the plurality of viewing modes; and a second presentation module configured to, in response to switching to at least one predetermined viewing mode of the plurality of viewing modes, present the set of media content items and information associated with each of the set of media content items together.

In a third aspect of the present disclosure, an electronic device is provided. The electronic device comprises at least one processing unit; and at least one memory coupled to the at least one processing unit and storing instructions for execution by the at least one processing unit. The instructions, when executed by the at least one processing unit, cause the electronic device to perform the method of the first aspect.

In a fourth aspect of the present disclosure, a computer-readable storage medium is provided. The computer-readable storage medium has a computer program stored thereon, and the computer program, when executed by a processor, implements the method of the first aspect.

It should be understood that the content described in this summary section is not intended to limit the key features or important features of the embodiments of the present disclosure, nor is it intended to limit the scope of the present disclosure. Other features of the present disclosure will become apparent from the following description.

### BRIEF DESCRIPTION OF THE DRAWINGS

The above and other features, advantages, and aspects of various embodiments of the present disclosure will become more apparent from the following detailed description in conjunction with the accompanying drawings. In the drawings, the same or similar reference signs refer to the same or similar elements, in which:
FIG. 1 illustrates a schematic diagram of an example environment in which embodiments of the present disclosure can be implemented;
FIG. 2 illustrates a flowchart of a process for content presentation according to some embodiments of the present disclosure;
FIG. 3 illustrates a schematic diagram of an example page according to some embodiments of the present disclosure;
FIG. 4A to FIG. 4E illustrate schematic diagrams of examples of the content presentation page in different viewing modes respectively according to some embodiments of the present disclosure;
FIG. 5 illustrates a schematic diagram of an example of the content presentation page with guidance information according to some embodiments of the present disclosure;
FIG. 6A to FIG. 6B illustrate schematic diagrams of examples of the content presentation page according to some other embodiments of the present disclosure;
FIG. 7A to FIG. 7C illustrate schematic diagrams of examples of the content presentation page according to some other embodiments of the present disclosure;
FIG. 8A to FIG. 8C illustrate schematic diagrams of examples of the content presentation page according to some other embodiments of the present disclosure;
FIG. 9A to FIG. 9B illustrate schematic diagrams of examples of the content presentation page according to some other embodiments of the present disclosure;
FIG. 10 to FIG. 10D illustrate schematic diagrams of examples of the content presentation page according to some other embodiments of the present disclosure;
FIGS. 11A to 11B illustrate schematic diagrams of examples of the content presentation page in a global page mode according to some other embodiments of the present disclosure;
FIGS. 12A to 12B illustrate schematic diagrams of examples of the content presentation page in a global page mode according to some other embodiments of the present disclosure;
FIG. 13A to FIG. 13B illustrate schematic diagrams of examples of the content presentation page according to some other embodiments of the present disclosure;
FIG. 14 illustrates a block diagram of an apparatus for content presentation according to some embodiments of the present disclosure; and
FIG. 15 illustrates an electronic device in which one or more embodiments of the present disclosure may be implemented.

### DETAILED DESCRIPTION

The embodiments of the present disclosure will be described in more detail below with reference to the accompanying drawings. Although some embodiments of the present disclosure are illustrated in the drawings, it should be understood that the present disclosure can be implemented in various forms and should not be construed as being limited to the embodiments set forth herein. Rather, these embodiments are provided for a more thorough and complete understanding of the present disclosure. It should be understood that the drawings and the embodiments of the present disclosure are provided for illustrative purposes only and are not intended to limit the scope of protection of the present disclosure.

In the description of the embodiments of the present disclosure, the term "including" and the like should be understood as non-exclusive inclusion, that is, "including but not limited to". The term "based on" should be understood as "based at least in part on." The term "an embodiment" or "the embodiment" should be understood as "at least one embodiment". The term "some embodiments" should be understood as "at least some of the embodiments". Other explicit and implicit definitions may also be included below.

Herein, unless explicitly stated, "in response to A" performing a step is not intended that this step is performed immediately after "A", but may include one or more intermediate steps.

It is to be understood that the data involved in the technical solution, including but not limited to the data itself, the obtaining or use of the data, should comply with the requirements of corresponding laws and regulations and relevant provisions.

It is to be understood that, before using the technical solutions disclosed in the various embodiments of the present disclosure, the user shall be informed of the type, the scope of use, and use scenarios and so on of personal information involved in the present disclosure in an appropriate manner in accordance with relevant laws and regulations, and the user's authorization shall be obtained.

For example, in response to receiving an active request from a user, prompt information is sent to the user to explicitly prompt the user that an operation requested by the user will require to obtain and use personal information of the user, so that the user can autonomously select, according to the prompt information, whether to provide the personal information to software or hardware, such as an electronic device, an application program, a server, or a storage medium that performs the operations of the technical solutions of the present disclosure.

As an optional but non-limiting implementation, in response to receiving an active request of the user, the prompt information is sent to the user, for example, in the form of a pop-up window, in which the prompt information may be presented in the form of text. In addition, the pop-up window may further carry a selection control for the user to select "agree" or "not agree" to provide the personal information to the electronic device.

It should be understood that the above process for notifying and obtaining the user's authorization is merely illustrative, and do not limit the implementations of the present disclosure, and other approaches that meet the relevant laws and regulations may also be applied to the implementations of the present disclosure.

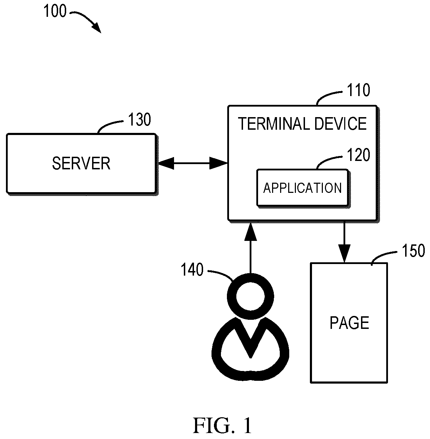

FIG. 1 illustrates a schematic diagram of an example environment 100 in which embodiments of the present disclosure can be implemented. In this example environment 100, an application 120 is installed in a terminal device 110. A user 140 may interact with the application 120 via the terminal device 110 and / or an attached device of the terminal device 110. The application 120 may be a content sharing application capable of providing the user 140 with various services related to media content items, including browsing, commenting, reposting, creation (e.g., shooting and / or editing), posting, etc. of the content. As used herein, "media content item" includes one or more types of content, for example, videos, images, animated images, image sets, audios, texts, and the like.

In the environment 100 of FIG. 1, if the application 120 is active, the terminal device 110 may present a page 150 of the application 120. The page 150 may include various pages that can be provided by the application 120, such as a content presentation page, a content creation page, a content posting page, a message page, a personal homepage, and so forth. The application 120 may provide a content browsing function to browse various types of content posted in the application 120. The application 120 may also provide content creation function, including shooting, uploading, editing, and / or posting media content items.

In some embodiments, the terminal device 110 communicates with the server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an e-book device, a gaming device, or any combination of the foregoing, including accessories and peripherals of these devices, or any combination thereof. In some embodiments, the terminal device 110 can also support any type of interface for a user (such as, "wearable" circuitry, and so on). The server 130 may be, for example, various types of computing systems/servers capable of providing computing capabilities, including, but not limited to, mainframes, edge computing nodes, computing devices in a cloud environment, and the like.

It should be understood that the structures and functionalities of various elements in the environment 100 are described for illustrative purposes only, and do not imply any limitation to the scope of the present disclosure.

Typically, content associated with a user including content posted by the user, content favorited by the user, content liked by the user, and the like may be presented in a specific content presentation page of an application, for example, a personal homepage. However, these media content items are organized and presented in a fixed manner. For example, such media content is typically presented in a fixed size. However, the user may have different requirements for the media content presented on the content display page. For example, in a case where the user needs to quickly browse a large amount of media content, the user may desire the content presentation page to simultaneously present as much media content as possible. In a case where the user needs to more accurately locate the media content of interest, the user may desire the content presentation page to present relatively less media content simultaneously. A single organization and presentation manner cannot meet the demands of users in different situations, resulting in poor user experience.

According to the embodiments of the present disclosure, an improved solution for content presentation is presented. In this solution, a set of media content items are presented on a content presentation page. The plurality of viewing modes is switched based on a mode switching operation for the viewing mode. In different viewing modes, the set of media content items are presented at different sizes. If a predetermined viewing mode is switched to, information associated with the set of media content is presented together with the set of media content. In this way, the user can switch the viewing modes as needed to acquire a better content browsing experience.

Some example embodiments of the present disclosure will continue to be described below with reference to the accompanying drawings.

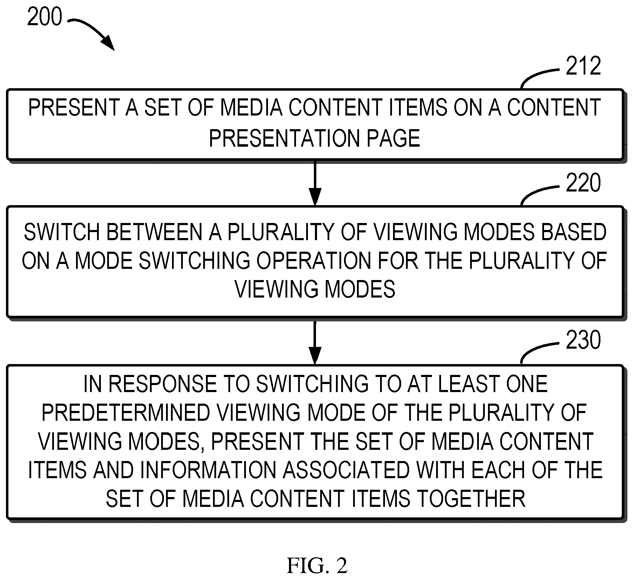

FIG. 2 illustrates a flowchart of a process 200 for content presentation according to some embodiments of the present disclosure. The process 200 may be implemented at the terminal device 110. For the purpose of discussion, the process 200 will be described with reference to the environment 100 shown in FIG. 1.

At block 210, the terminal device 110 presents a set of media content items on the content presentation page.

The content presentation page refers to a page for presenting a set of media content items associated with a user and other related information. A set of media content items that can be presented on a content presentation page may include various types of media content items. Different types of media content items may include, for example, a set of media content items posted by the user, a set of media content items favorited by the user, a set of media content items that the user likes (e.g., likes), and so forth. The media content item to be presented on the content presentation page may be determined according to application design requirements. The specific media content items to be presented and the number of media content items may vary in different scenarios.

In some examples, the content presentation page may include a personal homepage. In some embodiments, the content presentation page may be configured to be any suitable page in an application for organizing media content, and the embodiments of the present disclosure are not limited in this respect. In some embodiments, an application 120, such as, a content sharing application, is installed on the terminal device 110. The application 120 can provide functions such as content browsing, content sharing, messaging between users, and the like. The content presentation page may be a page of the application 120.

In the embodiments of the present disclosure, as will be described in detail below, different viewing modes are allowed to be switched on the content presentation page for viewing media content items on the page. For example, if the user opens the content presentation page, the set of media content items may be presented in a default viewing mode, such as a three-column viewing mode. Switching is performed between multiple viewing modes with the mode switching operation of the user.

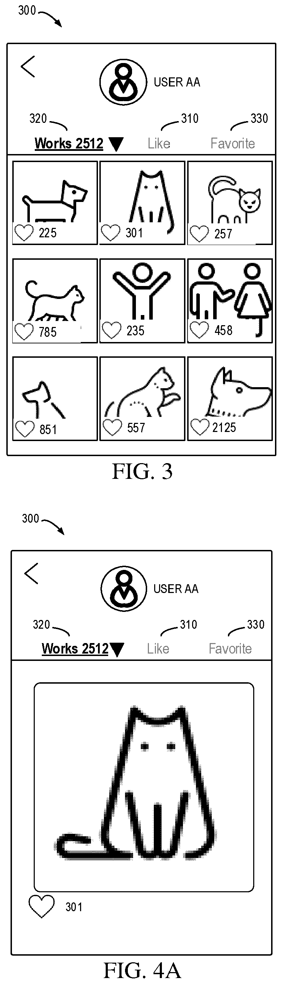

To better understand the example embodiments, it will be described below with reference to an example page of an application. FIG. 3 illustrates a content presentation page 300 of the application 120. A set of media content items, such as video and / or images, are presented on the content presentation page 300. In this example, a personal page of "User AA" is displayed on the content presentation page 300, and a plurality of media content items is presented in a three-column viewing mode. It is to be understood that the viewing mode shown in FIG. 3 is merely given as an example. The content presentation page 300 may also present additional information associated with the plurality of media content items. Merely by way of example, the content presentation page 300 may present a number of Likes of the media content items.

As previously described, the content presentation page 300 may display media content items under different categories. In some embodiments, different categories may be switched to by different navigation tabs in the navigation bar. For example, the media content items posted by the user AA are presented under the navigation tab 320. If the user selects the navigation tab 310, the content presentation page 300 may present a set of media content items that the user AA likes. If the user selects the navigation tab 330, the content presentation page 300 may present a set of media content items that the user AA favorites.

It should be understood that the page 300 in FIG. 3 and pages in other figures to be described below are merely example pages, and various page designs may actually exist. Individual graphical elements on a page may have different arrangements and different visual representations, one or more of which may be omitted or replaced, and one or more other elements may also be present. Embodiments of the present disclosure are not limited in this respect.

At block 220, the terminal device 110 switches between the plurality of viewing modes based on a mode switching operation for the plurality of viewing modes.

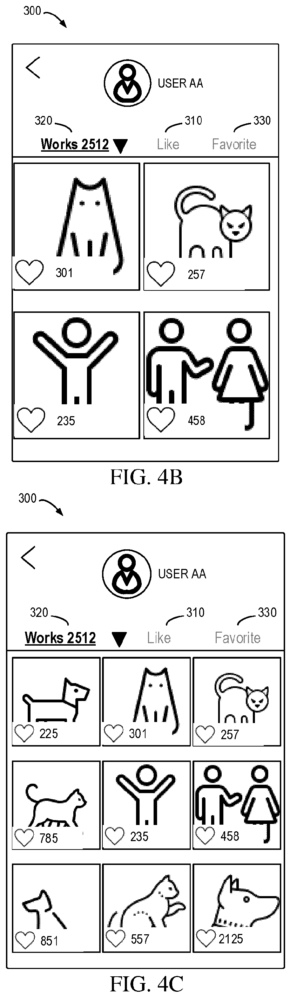

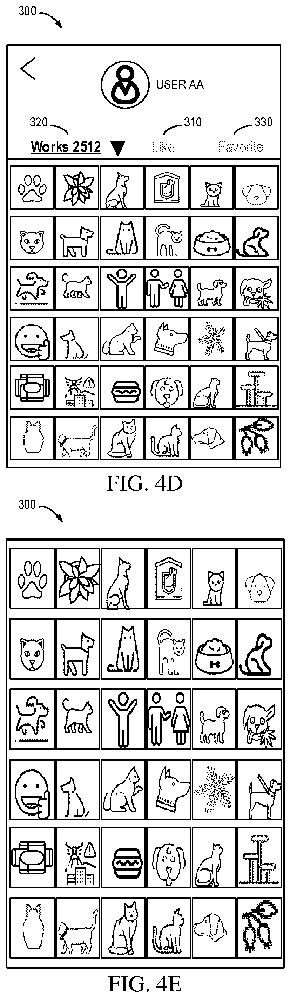

In some embodiments, the viewing mode may include a single-column viewing mode. For example, FIG. 4A illustrates the content presentation page 300 presenting the media content items in a single column viewing mode. The viewing mode may also include a dual-column viewing mode. As an example, FIG. 4B illustrates the content presentation page 300 presenting the media content items in the dual-column viewing mode. In other embodiments, the viewing mode may include a three-column viewing mode. For example, FIG. 4C illustrates the content presentation page 300 presenting the media content items in the three-column viewing mode. In some embodiments, the viewing mode may also include a six-column viewing mode. As an example, FIG. 4D illustrates the content presentation page 300 presenting the media content items in the six-column viewing mode. In some embodiments, the viewing mode may further include one or more of the following: a nine-column viewing mode, a global page viewing mode. For example, FIG. 4E illustrates the content presentation page 300 presenting the media content items in an immersive viewing mode. As shown in FIG. 4E, the global page viewing mode (which may also be referred to as the "immersive viewing mode") does not display boundary of the region and the navigation bar. In other words, the global page viewing mode presents the media content items in full screen form. In this way, different requirements of the user for the viewing modes can be achieved.

In some embodiments, the number of viewing modes may depend on a size of the display region of the terminal device 110. As an example, a larger display region may support the viewing modes with more columns. For example, if the terminal device 110 is a tablet device with a larger display screen, the terminal device 110 may support the viewing modes with more columns. In other embodiments, the number of viewing modes may depend on a configuration of the terminal device 110. For example, if the terminal device 110 has a higher screen resolution, the terminal device 110 may support the viewing modes with more columns. The embodiments of the present disclosure do not limit the number and specific types of the plurality of viewing modes supported.

The set of media content items are presented in a plurality of different sizes respectively, in a plurality of viewing modes. Referring to FIG. 4A to FIG. 4C, the media content items are presented in different sizes in different viewing modes. For example, compared with a three-column viewing mode (as shown in FIG. 4C), the set of media content items are presented in a larger size in the dual-column viewing mode (as shown in FIG. 4B).

The terminal device 110 may detect a mode switching operation for a plurality of viewing modes. In certain embodiments, the mode switching operation may include a multi-touch gesture operation. For example, the gesture operation may include a movement between a plurality of touch points on a touch screen of the terminal device 110. In other words, as the gesture changes, the contact position between the user's finger and the touch screen changes, and a distance between the plurality of touch points also changes. In this case, the terminal device 110 may detect the mode switching operation based on the movement between the plurality of touch points on the touch screen. In some embodiments, the multi-touch gesture operation includes a two-finger pinch close operation. Alternatively, or additionally, the multi-touch gesture operation includes a two-finger pinch open operation. Of course, pinch close and pinch open operations with more fingers are also possible. In such a manner, as the fingers pinch close or open, etc., the presentation size of the media content item is also decreased, or increased. In this way, switching between the viewing modes may be implemented in a simpler manner. Note that, in addition to multi-touch gesture operations, other gesture operations, stylus operations, or other interaction operations may also be configured for controlling mode switching.

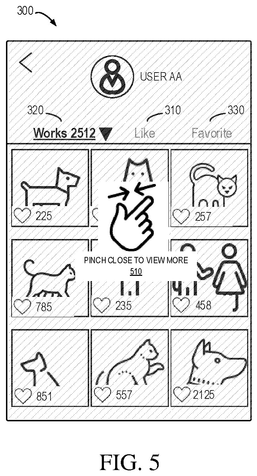

In some embodiments, the terminal device 110 may provide guidance information to help the user know how to perform the viewing mode switching operation. For example, in a case that the user does not use excessive touch gestures for viewing mode switching, the terminal device 110 may display the guidance information. Merely by way of example, as shown in FIG. 5, the terminal device 110 may display guidance information 510. In some embodiments, the guidance information 510 may include gesture suggestion information. Optionally, the guidance information 510 may further include textual information to help the user better understand the viewing mode switching operation. For example, if the guidance information 510 includes textual information "pinch close to view more", the user may then understand that a pinch close gesture is required e if he or she desires to view more media content items on the content presentation page 300.

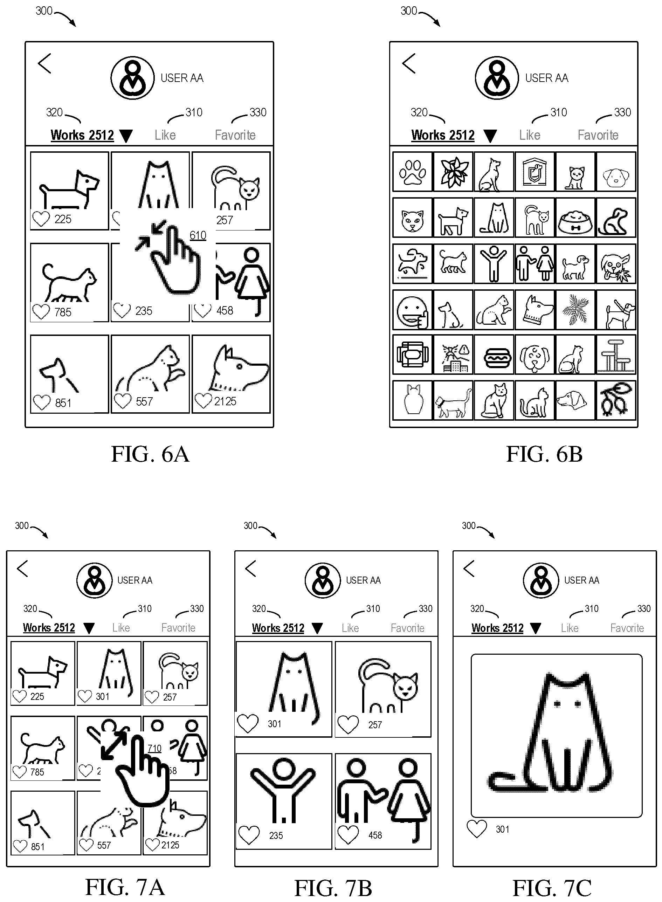

In some embodiments, if the gesture operation indicates a decrease in a distance between the plurality of touch points on the touch screen, a viewing mode having a larger presentation size (which may be referred to as a "first viewing mode") may be switched to a viewing mode having a smaller presentation size (which may be referred to as a "second viewing mode"). In other words, the media content item is presented in a first size in the first viewing mode, and is presented in a second size in the second viewing mode, and the first size is greater than the second size. Merely by way of example, FIG. 6A illustrates the terminal device 110 presenting the set of media content items in a three-column viewing mode on the content presentation page 300. If the user performs the two-finger pinch close operation 610 on the touchscreen of the terminal device 100, the terminal device 110 switches from the three-column viewing mode to the six-column viewing mode. That is, based on the two-finger pinch close operation 610, the terminal device 100 presents the set of media content items in the six-column viewing mode on the content presentation page 300 (as shown in FIG. 6B).

In other embodiments, if the gesture operation indicates an increase in a distance between the plurality of touch points on the touch screen, a viewing mode having a smaller presentation size (which may be referred to as a "third viewing mode") may be switched to a viewing mode having a larger presentation size (which may be referred to as a "fourth viewing mode"). In other words, the media content item is presented in a third size in the third viewing mode, and is presented in a fourth size in the fourth viewing mode, and the third size is less than the fourth size. Merely by way of example, FIG. 7A illustrates the terminal device 110 presenting the set of media content items in the three-column viewing mode on the content presentation page 300. In some embodiments, if the user performs the two-finger pinch open operation 710 on the touch screen of the terminal device 100, the terminal device 110 switches from the three-column viewing mode to the dual-column viewing mode. That is, based on the two-finger pinch open 710, the terminal device 100 presents the set of media content items in the dual-column viewing mode on the content presentation page 300 (as shown in FIG. 7B). In this case, in some embodiments, if the two-finger pinch open operation 710 continues to be maintained, the terminal device 110 switches from the dual-column viewing mode to the single-column viewing mode, that is, the terminal device 110 presents the set of media content items in the single-column viewing mode on the content presentation page 300 (as shown in FIG. 7C). In some embodiments, if the two-finger pinch open operation 710 is performed at a speed over a certain threshold, the terminal device 110 will switch directly from the three-column viewing mode to the single-column viewing mode.

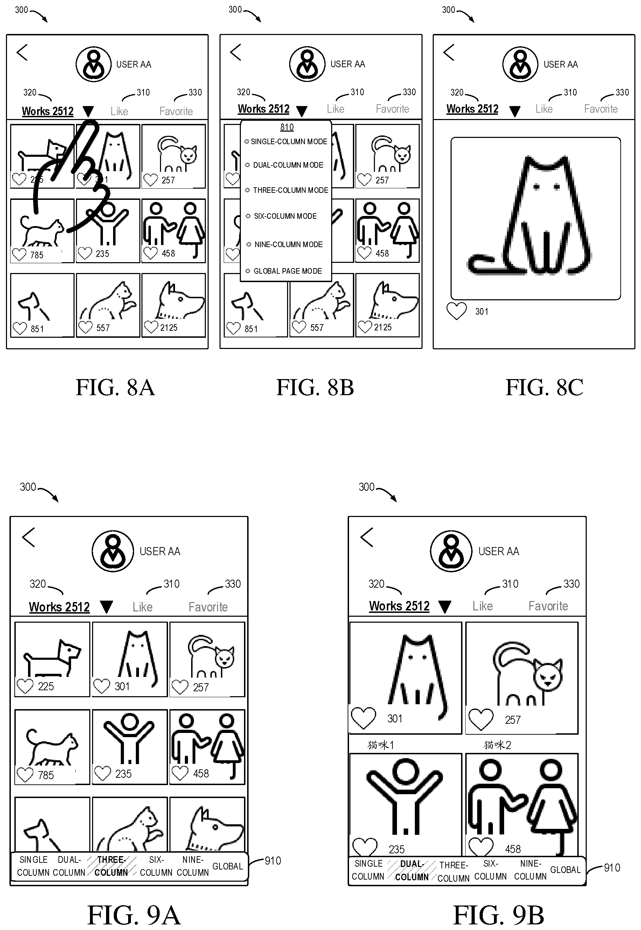

In some embodiments, the terminal device 110 may present a mode selection portal on the content presentation page. In this case, if the terminal device 110 detects a trigger operation on the mode selection portal, the terminal device 110 may present a list of a plurality of options corresponding to the plurality of viewing modes. The terminal device 110 may detect a selection of the list of the plurality of options. Merely by way of example, FIG. 8A illustrates the terminal device 110 presenting the media content items in the three-column viewing mode on the content presentation page 300. The navigation tab 320 (i.e., the mode selection portal) is also presented on the content presentation page 300, which may have a drop-down menu. If the terminal device 110 detects the user selection of the navigation tab 320 (e.g., clicking, touching, etc.), the terminal device 110 presents a list 810 of a plurality of options corresponding to a plurality of viewing modes on the content presentation page 300 (as shown in FIG. 8B). List 810 may include a plurality of viewing modes, such as a single-column mode, a dual-column mode, a three-column mode, a six-column mode, a nine-column mode, a global page mode, etc.

In some embodiments, the list 810 may also not include the global page mode. For example, the global page mode may be used as a special viewing mode. The user may mine the global page pattern through gesture operations. If the single-column mode is selected, the terminal device 110 switches from the dual-column viewing mode to the single-column viewing mode, that is, the terminal device 110 presents the set of media content items in the single-column viewing mode in the content presentation page 300 (as shown in FIG. 8C). In this way, the expectation of the user on the viewing mode can be quickly and accurately achieved.

Alternatively, the terminal device 110 may present, in a tab bar of the content presentation page, a plurality of tabs respectively corresponding to the plurality of viewing modes. In this case, the terminal device 110 may detect a selection of a plurality of tabs in the tab bar. As shown in FIG. 9A and FIG. 9B, the terminal device 110 presents a plurality of tabs 910 on the content presentation page 300. As shown in FIG. 9, if a tab corresponding to the three-column viewing mode is selected, the terminal device 110 presents the set of media content items in the three-column viewing mode on the content presentation page 300. If a tab corresponding to the dual-column viewing mode is selected, the terminal device 110 presents the set of media content items in the dual-column viewing mode on the content presentation page 300 as shown in FIG. 9B. In this way, the plurality of viewing modes for selection may be presented in a more simplified manner.

Returning to FIG. 2, at block 230, in response to switching to at least one predetermined viewing mode of the plurality of viewing modes, the terminal device 110 presents the set of media content and information associated with each of the set of media content together.

In a case where switching between a plurality of viewing modes is supported, it may be possible to set up certain viewing modes that allows the media content item itself and information associated with the media content item to be presented simultaneously. The information associated with the media content item may include information about multiple aspects of the media content item. In some applications, such information may be partially or completely presented when clicking to open the details page of the media content item. As some examples, information associated with the media content item (sometimes referred to herein as "additional information") may include a title of the media content item, description information that is posted along with posting the media content item, interaction information of the media content item (e.g., a number of Likes, comments, favorites, views, etc. in the application), attribute information of the media content item (e.g., video duration, image size, etc. ), and any other relevant information. The specific associated information to be presented is not limited herein, but can be configured according to actual application needs.

In some embodiments, the predetermined viewing mode that allows the presentation of additional information may include one or more of the following: a single-column viewing mode, a dual-column viewing mode, or a three-column viewing mode. For example, in the single-column viewing mode, the dual-column viewing mode, and the three-column viewing mode, the terminal device 110 may present some additional information associated with each of the media content items on the content presentation page. In the six-column viewing mode and the nine-column viewing mode, as the number of media content items presented in the page increases, the terminal device may not present additional information of each of the media content items. In this way, the user can more flexibly obtain relevant information about the media content items.

In some embodiments, the specific information presented in association with the media content item may be related to the media content item presentation size in the predetermined viewing mode. For example, the media content items are presented in a first predetermined size in a first predetermined viewing mode and presented at a second predetermined size in a second predetermined viewing mode. In this case, if the first predetermined size is greater than the second predetermined size, first information associated with the media content item presented in the first predetermined viewing mode is more than second information associated with the media content item presented in the second predetermined viewing mode. That is, in a predetermined viewing mode in which additional information is presented, additional information may be presented less or more, as the presentation size is decreased or increased.

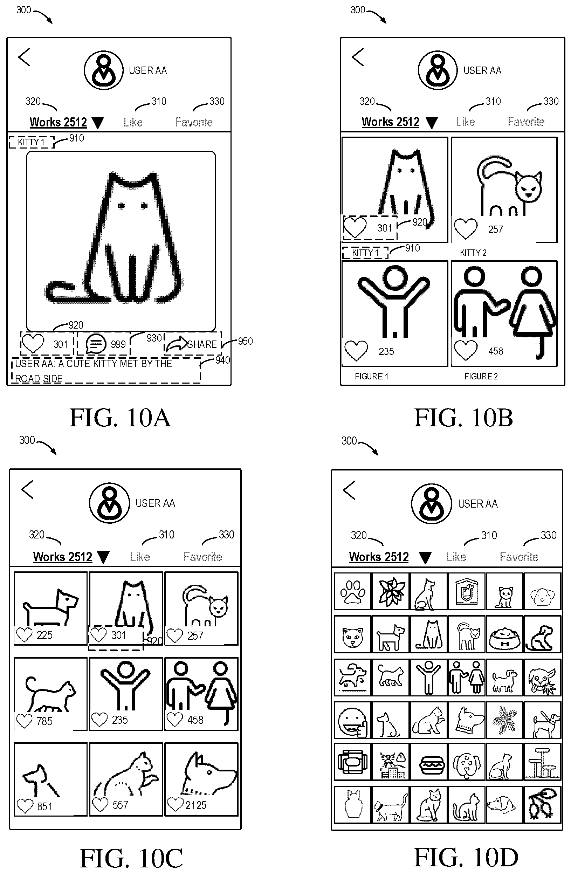

FIG. 10A t FIG. 10D illustrate information associated with the media content and the media content presented in a predetermined viewing mode. As shown in FIG. 10A, in the single-column viewing mode, the terminal device 110 presents the title 910 (i.e., "Kitty 1") of the media content item on the content presentation page 300. The content presentation page 300 further presents the number of Likes 920 of the media content item (i.e., the number of Likes is 301). The number of comments 930 of the media content item is further presented on the content presentation page 300. partial comments 940 for the media content item may also be presented on the content presentation page 300. In some embodiments, the content presentation page 300 may further present a sharing control 950 of the media content item. It is to be understood that, in the single-column viewing mode, additional information may further include other information. As shown in FIG. 10B, in the dual-column viewing mode, the terminal device 110 presents the title 910 (i.e., "Kitty 1") of the media content item on the content presentation page 300. The content presentation page 300 further presents the number of Likes 920 of the media content item (i.e., the number of Likes is 301). It is to be understood that in the dual-column viewing mode, additional information may further include other information. As shown in FIG. 10C, in the three-column viewing mode, the terminal device 110 presents the number of Likes 920 of the media content item on the content presentation page 300 (i.e., the number of Likes is 301). It is to be understood that, in the three-column viewing mode, additional information may further include other information. As shown in FIG. 10D, in the six-column viewing mode, the terminal device 110 does not present the additional information about the media content item on the content presentation page 300.

In some embodiments, in a plurality of viewing modes, the media content items are presented in a partial region of the content presentation page. For example, as shown in FIG. 4A to FIG. 4D and FIG. 10A to FIG. 10D, the content presentation page 100 presents the media content items within particular boundaries. The content presentation page 100 also presents other components and / or information, such as, navigation tabs 310, 320, and 330.

In some embodiments, if the terminal device 110 detects another mode switching operation, the terminal device 110 may switch to the global page mode. In the global page mode, the set of media content items are presented in a global region of the content presentation page. In some embodiments, entry of the global page mode may include gesture operations, for example, further pinching in a viewing mode of a minimum presentation size. For example, in the nine-column viewing mode, a two-finger pinch gesture is further performed. Alternatively, in some embodiments, the global page mode may be entered if further zoom in in the viewing mode of the maximum presentation size. For example, in the examples of FIG. 4A and FIG. 10A, the two-finger pinch open gesture is further performed. Alternatively, the global page mode may be entered by selecting a global page mode of a list of a plurality of options. As shown in FIG. 8B, the list 810 may include the global page mode. If the global page mode in the list 810 is selected, the terminal device 110 may switch to the global page mode. In some embodiments, if the terminal device 110 presents a tab corresponding to the global page mode in the tab bar of the content presentation page. In this case, if the tab corresponding to the global page mode is selected, the terminal device 110 may switch to the global page mode.

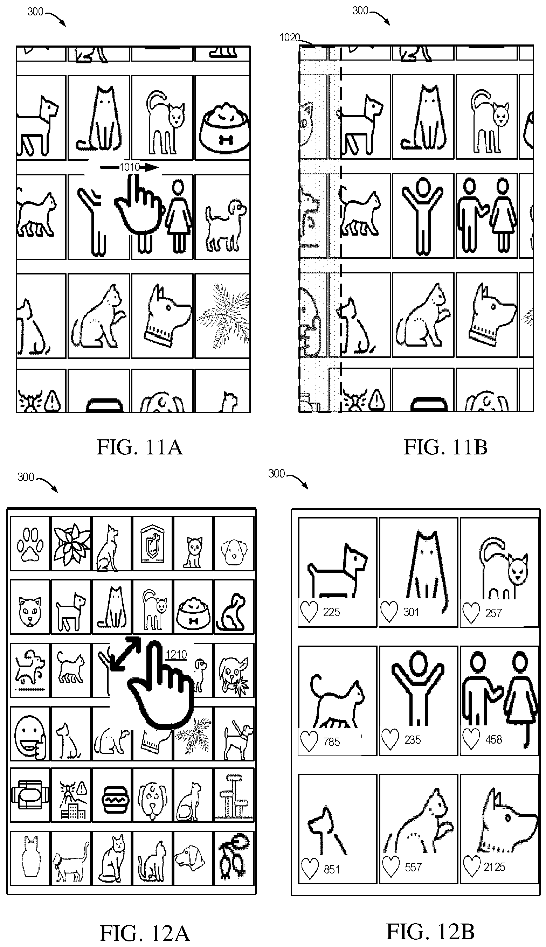

In the global page mode, the user is allowed to freely move and browse media content items under the global page through operations. For example, in some embodiments, if a movement operation in a predetermined direction of the content presentation page is detected in the global page mode, the media content item that is outside an edge of the content presentation page is translated in the predetermined direction into the global region of the content presentation page. The movement operation in the predetermined direction may include a leftward movement operation, a rightward movement operation, an upward movement operation, a downward movement operation, or other free directions. Merely by way of example, FIG. 11A illustrates the terminal device 110 presenting the media content items in the global page mode on the content presentation page 300. If the terminal device 110 detects a movement operation in the direction 1010, the terminal device 110 translates the media content item 1020 that is outside the edge of the content presentation page 300 in the direction 1010 into the global region of the content presentation page.

In some embodiments, if a mode switching operation for a plurality of viewing modes is detected in the global page mode, the terminal device 110 may switch between the plurality of viewing modes in the global page mode, thereby presenting the set of media content items in the plurality of viewing modes in the global region of the content presentation page. Merely by way of example, FIG. 12A illustrates the terminal device 110 presenting media content items in the global page mode on the content presentation page 300. The media content items are presented in a nine-column viewing mode. If the terminal device 110 performs the two-finger pinch open operation 1210, the terminal device 110 may transition from the nine-column viewing mode to the six-column viewing mode in the global page mode to present the media content items, that is, present the media content items in the six-column viewing mode in a global region of the content presentation page 300 (as shown in FIG. 12B).

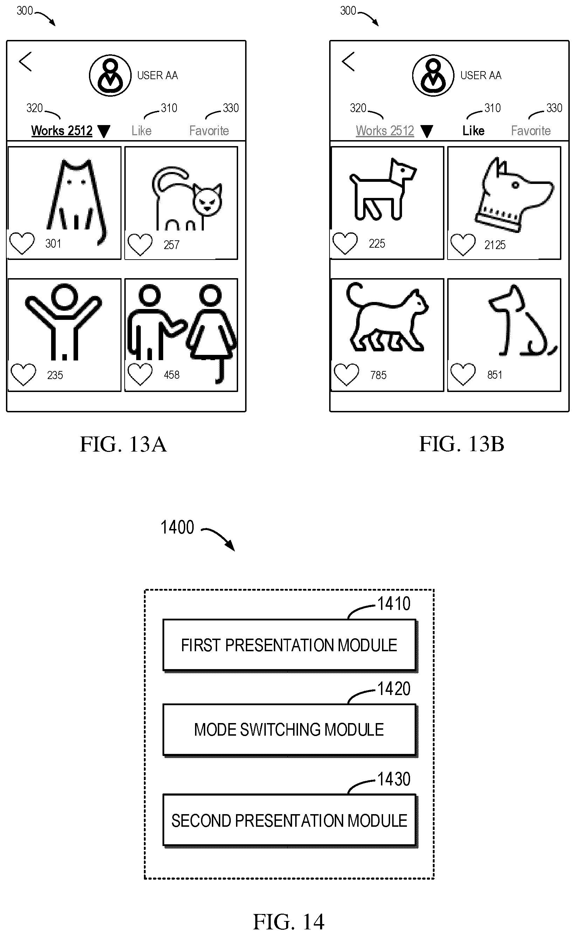

In some embodiments, the content presentation page may include a plurality of navigation tabs. For example, as shown in FIG. 3, FIGs. 4A to 4C, FIG. 5 to FIG. 10D, the navigation tabs 310, 320, and 330 are presented in the content presentation page 300. In this case, if a navigation switching operation for switching from a certain navigation tab to another navigation tab is detected while a set of media content items included in a certain navigation tab is presented in a specific viewing mode, the terminal device 110 switches to the other navigation tab and presents the media content items under the other navigation tab in this specific viewing mode. As shown in FIG. 13A, the media content items under the navigation tab 320 are presented in the two-column viewing mode. If the terminal device 110 detects a selection of the navigation tab 310, the terminal device 110 switches to the navigation tab 310. Also, as shown in FIG. 13B, the media content items under the navigation tab 310 are also presented in the two-column viewing mode.

According to the embodiments of the present disclosure, switching between a plurality of viewing modes for a set of media content items may be performed based on a detection of a mode switching operation, to present the set of media content items. The set of media content items are presented at a plurality of different sizes respectively, in a plurality of viewing modes, and in some of a plurality of views, the media content items are presented together with associated information. As the view size decreases, less information is presented in association. As the view size increases, more information is present in association. In this way, the diversified requirements of the user for the viewing mode are met, and the efficiency of browsing the media content is improved. In addition, the playing of the media content items, the browsing frequency and the staying duration of the content presentation page are also increased.

FIG. 14 illustrates a schematic structural block diagram of an apparatus 1400 for content presentation according to some embodiments of the present disclosure. The apparatus 1400 may be implemented or included in the terminal device 110. Various modules / components in the apparatus 1400 may be implemented by hardware, software, firmware, or any combination thereof.

The apparatus 1400 includes a first presentation module 1410 configured to present a set of media content items on a content presentation page. The apparatus 1400 includes a mode switching module 1420 configured to switch between a plurality of viewing modes based on a mode switching operation for the plurality of viewing modes. The set of media content items are presented in a plurality of different sizes, respectively, in the plurality of viewing modes. The apparatus 1400 also includes a second presentation module 1430 configured to, in response to switching to at least one predetermined viewing mode of the plurality of viewing modes, present the set of media content items and information associated with each of the set of media content items together.

In some embodiments, the mode switching operation comprises a multi-touch gesture operation comprising a movement between a plurality of touch points on a touch screen. In some embodiments, the mode switching module 1420 is further configured to in response to the multi-touch gesture operation indicating a decrease in a distance between the plurality of touch points, switch from a first viewing mode to a second viewing mode; and in response to the multi-touch gesture operation indicating an increase in the distance between the plurality of touch points, switch from the second viewing mode to the first viewing mode. A media content item is presented in a first size in the first viewing mode and is presented in a second size in the second viewing mode, and the first size is greater than the second size.

In some embodiments, the multi-touch gesture operation comprises a two-finger pinch close operation or a two-finger pinch open operation.

In some embodiments, the apparatus 1400 further comprises a detection module configured to present a mode selection portal on the content presentation page; in response to detecting a trigger operation on the mode selection portal, present a list of a plurality of options corresponding to the plurality of viewing modes; and detect a selection of the list of the plurality of options.

In some embodiments, the apparatus comprises a detection module configured to present, in a tab bar of the content presentation page, a plurality of tabs respectively corresponding to the plurality of viewing modes; and detect a selection of the plurality of tabs in the tab bar.

In some embodiments, the plurality of viewing modes comprises at least one of the following: a single-column viewing mode, a dual-column viewing mode, a three-column viewing mode, a six-column viewing mode, a nine-column viewing mode.

In some embodiments, the at least one predetermined viewing mode comprises at least one of the following: the single-column viewing mode, the dual-column viewing mode, the three-column viewing mode.

In some embodiments, the at least one predetermined viewing mode comprises a first predetermined viewing mode and a second predetermined viewing mode, wherein a media content item is presented in a first predetermined size in the first predetermined viewing mode and presented in a second predetermined size in the second predetermined viewing mode, the first predetermined size is greater than the second predetermined size, and first information associated with the media content items and presented in the first predetermined viewing mode is more than second information associated with the media content items and presented in the second predetermined viewing mode.

In some embodiments, the set of media content items are presented in a partial region of the content presentation page in the plurality of viewing modes. In some embodiments, the mode switching module 1410 is further configured to, in response to detecting another mode switching operation, switch to a global page mode in which the set of media content items are presented in a global region of the content presentation page.

In some embodiments, the apparatus 1400 further comprises a translation module configured to, in response to detecting, in the global page mode, a movement operation in a predetermined direction of the content presentation page, translate a media content item that is outside an edge of the content presentation page in the predetermined direction into the global region of the content presentation page.

In some embodiments, the mode switching module 1410 is further configured to, in response to detecting, in the global page mode, a mode switching operation for the plurality of viewing modes, switch between the plurality of viewing modes in the global page mode to present the set of media content items in the plurality of viewing modes in the global region of the content presentation page.

In some embodiments, the set of media content items comprises a first set of media content items under a first navigation tab in the content presentation page. In some embodiments, the mode switching module 1410 is further configured to in accordance with detecting a navigation switching operation for switching from the first navigation tab to a second navigation tab while presenting the first set of media content items in a third viewing mode of the plurality of viewing modes, switch to the second navigation tab. In some embodiments, the apparatus 1400 further comprises a third presentation module configured to present, in the third viewing mode, a second set of media content items under the second navigation tab.

In some embodiments, the content presentation page includes a personal page of the content sharing application.

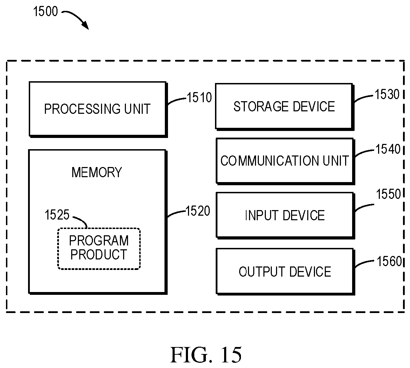

FIG. 15 illustrates a block diagram of an electronic device 1500 in which one or more embodiments of the present disclosure may be implemented. It should be understood that the electronic device 1500 in FIG. 15 is shown for merely illustrative purpose, and should not limit the functionality and scope of the embodiments described herein. The electronic device 1500 shown in FIG. 15 may be configured to implement the terminal device 110 in FIG. 1 or the apparatus 1400 shown in FIG. 14.

As shown in FIG. 15, the electronic device 1500 is in the form of a general-purpose computing device. Components of the electronic device 1500 may include, but are not limited to, one or more processors or processing units 1510, a memory 1520, a storage device 1530, one or more communications units 1540, one or more input devices 1550, and one or more output devices 1560. The processing unit 1510 may be a physical or virtual processor and can perform various processing according to a program stored in the memory 1520. In a multiprocessor system, a plurality of processing units executes computer executable instructions in parallel, so as to improve the parallel processing capability of the electronic device 1500.

The electronic device 1500 typically includes a plurality of computer storage medium. Such media may be any available media that are accessible by the electronic device 1500, including, but not limited to, volatile and non-volatile media, removable and non-removable media. The memory 1520 may be a volatile memory (e.g., a register, cache, random access memory (RAM)), non-volatile memory (e.g., read-only memory (ROM), electrically erasable programmable read-only memory (EEPROM), flash memory), or some combination thereof. The storage device 1530 may be a removable or non-removable medium and may include a machine-readable medium, such as a flash drive, a magnetic disk, or any other medium that can be used to store information and/or data (e. g., training data for training) and that can be accessed within the electronic device 1500.

The electronic device 1500 may further include additional detachable/undetachable, volatile/nonvolatile storage medium. Although not shown in FIG. 15, a magnetic disk drive for reading from or writing to a detachable, nonvolatile magnetic disk, such as a "floppy disk" and an optical disk drive for reading from or writing to a detachable, nonvolatile optical disk may be provided. In these cases, each drive may be connected to a bus (not shown) by one or more data media interfaces. The memory 1520 may include a computer program product 1525 having one or more program modules configured to perform various methods or actions of various embodiments of the present disclosure.

The communication unit 1540 implements communication with other electronic devices through a communication medium. Additionally, functions of components of the electronic device 1500 may be implemented by a single computing cluster or a plurality of computing machines, and these computing machines can communicate through a communication connection. Thus, the electronic device 1500 may operate in a networked environment using logical connections to one or more other servers, network personal computers (PCs), or another network node.

The input device 1550 may be one or more input devices, such as a mouse, a keyboard, a trackball, etc. The output device 1560 may be one or more output devices, such as a display, a speaker, a printer, etc. The electronic device 1500 may also communicate with one or more external devices (not shown), such as a storage device, a display device, or the like through the communication unit 1540 as desired, and communicate with one or more devices that enable a user to interact with the electronic device 1500, or communicate with any device (e.g., a network card, a modem, or the like) that enables the electronic device 1500 to communicate with one or more other electronic devices. Such communication may be performed via an input/output (I/O) interface (not shown).

According to an example implementation of the present disclosure, a computer readable storage medium is provided, on which computer-executable instructions is stored, wherein the computer-executable instructions are executed by a processor to implement the method described above. According to an example implementation of the present disclosure, a computer program product is also provided, which is tangibly stored on a non-transitory computer readable medium and includes computer-executable instructions that are executed by a processor to implement the method described above.

Aspects of the present disclosure are described herein with reference to flowcharts and/or block diagrams of methods, apparatus, devices and computer program products implemented in accordance with the present disclosure. It should be understood that each block of the flowcharts and/or block diagrams and combinations of blocks in the flowchart and/or block diagrams can be implemented by computer readable program instructions.

These computer readable program instructions may be provided to a processing unit of a general-purpose computer, special purpose computer, or other programmable data processing apparatus to produce a machine, such that the instructions, when executed via the processing unit of the computer or other programmable data processing apparatus, create means for implementing the functions/actions specified in one or more blocks of the flowcharts and/or block diagrams. These computer readable program instructions may also be stored in a computer readable storage medium that can direct a computer, a programmable data processing apparatus, and/or other devices to function in a particular manner, such that the computer readable medium storing the instructions includes an article of manufacture that includes instructions which implement various aspects of the functions/actions specified in one or more blocks of the flowcharts and/or block diagrams.

The computer readable program instructions may be loaded onto a computer, other programmable data processing apparatus, or other devices, causing a series of operational steps to be performed on the computer, other programmable data processing apparatus, or other devices, to produce a computer implemented process such that the instructions, when being executed on the computer, other programmable data processing apparatus, or other devices, implement the functions/actions specified in one or more blocks of the flowchart and/or block diagrams.

The flowcharts and block diagrams in the drawings illustrate the architecture, functionality, and operations of possible implementations of the systems, methods and computer program products according to various implementations of the present disclosure. In this regard, each block in the flowchart or block diagram may represent a module, segment, or portion of instructions which includes one or more executable instructions for implementing the specified logical function(s). In some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

Various implementations of the disclosure have been described as above, the foregoing description is example, not exhaustive, and the present application is not limited to the implementations as disclosed. Many modifications and variations will be apparent to those of ordinary skill in the art without departing from the scope and spirit of the implementations as described. The selection of terms used herein is intended to best explain the principles of the implementations, the practical application, or improvements to technologies in the marketplace, or to enable those skilled in the art to understand the implementations disclosed herein.

## Claims

1. A method for content presentation, comprising:
presenting a set of media content items on a content presentation page;
switching between a plurality of viewing modes based on a mode switching operation for the plurality of viewing modes, the set of media content items being presented in a plurality of different sizes respectively in the plurality of viewing modes; and
in response to switching to at least one predetermined viewing mode of the plurality of viewing modes, presenting the set of media content items and information associated with each of the set of media content items together.

2. The method of claim 1, wherein the mode switching operation comprises a multi-touch gesture operation comprising a movement between a plurality of touch points on a touch screen, wherein switching between the plurality of viewing modes comprises:
in response to the multi-touch gesture operation indicating a decrease in a distance between the plurality of touch points, switching from a first viewing mode to a second viewing mode; and
in response to the multi-touch gesture operation indicating an increase in a distance between the plurality of touch points, switching from the second viewing mode to the first viewing mode,
wherein a media content item is presented in a first size in the first viewing mode and is presented in a second size in the second viewing mode, and the first size being greater than the second size.

3. The method of claim 2, wherein the multi-touch gesture operation comprises a two-finger pinch close operation or a two-finger pinch open operation.

4. The method of claim 1, further comprising detecting the mode switching operation based on the following:
presenting a mode selection portal on the content presentation page;
in response to detecting a trigger operation on the mode selection portal, presenting a list of a plurality of options corresponding to the plurality of viewing modes; and
detecting a selection of the list of the plurality of options.

5. The method of claim 1, further comprising detecting the mode switching operation based on the following:
presenting, in a tab bar of the content presentation page, a plurality of tabs respectively corresponding to the plurality of viewing modes; and
detecting a selection of the plurality of tabs in the tab bar.

6. The method of claim 1, wherein the plurality of viewing modes comprises at least one of the following:
a single-column viewing mode,
a dual-column viewing mode,
a three-column viewing mode,
a six-column viewing mode,
a nine-column viewing mode.

7. The method of claim 6, wherein the at least one predetermined viewing mode comprises at least one of the following: the single-column viewing mode, the dual-column viewing mode, the three-column viewing mode.

8. The method of claim 1, wherein the at least one predetermined viewing mode comprises a first predetermined viewing mode and a second predetermined viewing mode, wherein a media content item is presented in a first predetermined size in the first predetermined viewing mode and presented in a second predetermined size in the second predetermined viewing mode, the first predetermined size is greater than the second predetermined size, and first information associated with the media content items and presented in the first predetermined viewing mode is more than second information associated with the media content items and presented in the second predetermined viewing mode.

9. The method of claim 1, wherein the set of media content items are presented in a partial region of the content presentation page in the plurality of viewing modes, and the method further comprises:
in response to detecting another mode switching operation, switching to a global page mode in which the set of media content items are presented in a global region of the content presentation page.

10. The method of claim 9, further comprising:
in response to detecting, in the global page mode, a movement operation in a predetermined direction of the content presentation page, translating a media content item that is outside an edge of the content presentation page in the predetermined direction into the global region of the content presentation page.

11. The method of claim 10, further comprising:
in response to detecting, in the global page mode, a mode switching operation for the plurality of viewing modes, switching between the plurality of viewing modes in the global page mode to present the set of media content items in the plurality of viewing modes in the global region of the content presentation page.

12. The method of claim 1, wherein the set of media content items comprises a first set of media content items under a first navigation tab in the content presentation page, and the method further comprises:
in accordance with detecting a navigation switching operation for switching from the first navigation tab to a second navigation tab while presenting the first set of media content items in a third viewing mode of the plurality of viewing modes,
switching to the second navigation tab; and
presenting, in the third viewing mode, a second set of media content items under the second navigation tab.

13. The method of any of claims 1 to 11, wherein the content presentation page comprises a personal page of a content sharing application.

14. An apparatus for content presentation, comprising:
a first presentation module configured to present a set of media content items on a content presentation page;
a switching module configured to switch between a plurality of viewing modes based on a mode switching operation for the plurality of viewing modes, the set of media content items being presented in a plurality of different sizes respectively in the plurality of viewing modes; and
a second presentation module configured to, in response to switching to at least one predetermined viewing mode of the plurality of viewing modes, present the set of media content items and information associated with each of the set of media content items together.

15. An electronic device comprising:
at least one processing unit; and
at least one memory coupled to the at least one processing unit and storing instructions for execution by the at least one processing unit, wherein the instructions, when executed by the at least one processing unit, causes the electronic device to perform the method of any of claims 1 to 13.

16. A computer readable storage medium having a computer program stored thereon, wherein the computer program, when executed by a processor, implements the method of any of claims 1 to 13.
